# FASCICULE DE BREVET EUROPEEN

(11) **EP 1 875 073 B1**
(45) Date de publication et mention de la délivrance du brevet: **02.06.2010**
(21) Numéro de dépôt: 06743746.7
(22) Date de dépôt: 26.04.2006
(51) Int. Cl.: F03G 7/06

(54) **ELEMENT THERMOSTATIQUE A REPONSE RAPIDE, AINSI QUE CARTOUCHE ET ROBINET EQUIPES D'UN TEL ELEMENT**
SCHNELL REAGIERENDES THERMOSTATISCHES ELEMENT SOWIE PATRONE UND VENTIL, DIE BZW. DAS MIT DIESEM ELEMENT AUSGESTATTET IST
RAPID-RESPONSE THERMOSTATIC ELEMENT AS WELL AS A CARTRIDGE AND VALVE THAT ARE EQUIPPED WITH THIS ELEMENT

(30) Priorité: 27.04.2005 FR 0504241
(43) Date de publication de la demande: 09.01.2008
(73) Titulaire: Vernet, 91340 Ollainville (FR)
(72) Inventeur: LHUILLIER, Philippe, F-91650 Breuillet (FR)
(74) Mandataire: Grand, Guillaume
(86) Numéro de dépôt international: PCT/FR2006/000932
(87) Numéro de publication internationale: WO 2006/114522

(56) Documents cités:
- FR-A- 2 699 230
- GB-A- 1 385 372
- US-A- 5 052 181
- PATENT ABSTRACTS OF JAPAN vol. 010, no. 227 (M-505), 7 août 1986 (1986-08-07) & JP 61 061953 A (FUJI THOMSON KK), 29 mars 1986 (1986-03-29)

## Description

La présente invention concerne un élément thermostatique du type comportant une coupelle externe métallique de forme allongée, contenant une matière notablement dilatable et contractile en fonction du sens de variation de sa température, et un piston mobile par rapport à la coupelle dans la direction longitudinale de celle-ci et couplé à la matière dilatable et contractile pour se déplacer en sens opposés selon que la matière se dilate ou se contracte. L'invention concerne également une cartouche et un robinet thermostatique équipé d'un tel élément.

De tels éléments thermostatiques sont utilisés notamment dans le domaine du réglage de la température d'un fluide issu du mélange de deux courants de fluide à des températures différentes, le mouvement relatif du piston et de la coupelle étant mis en oeuvre pour modifier la proportion du mélange des deux courants de fluide. C'est notamment le cas dans les cartouches de robinet mitigeur et dans les robinets mitigeurs. Le document FR 2 699 230 est considéré comme le document décrivant l'état de la technique le plus proche.

Pour un grand nombre d'applications dans ce domaine, il est nécessaire que la réponse de l'élément thermostatique soit très rapide, c'est-à-dire que la modification de la température du milieu dans lequel se trouve la coupelle entraîne à très bref délai un mouvement correspondant du piston. Cela est particulièrement le cas pour les éléments thermostatiques plongés dans un courant d'eau d'alimentation d'une installation sanitaire, application pour laquelle, une température idéale étant sélectionnée, une baisse de température de trois ou quatre degrés seulement est très désagréable, et une augmentation de quelques degrés peut être la cause de brûlures.

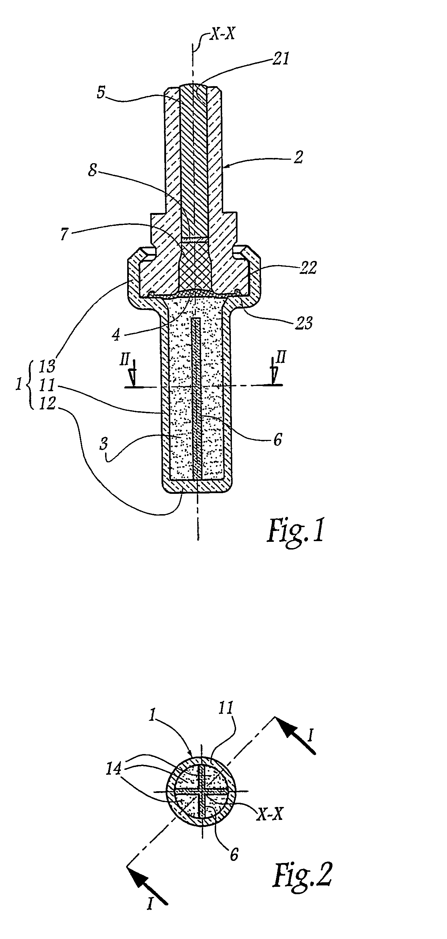

Les éléments thermostatiques utilisés classiquement dans ce type d'application comportent, par exemple conformément aux figures 1 et 2, une coupelle métallique 1 ayant une partie courante tubulaire 11 présentant une forme générale cylindrique à base circulaire et d'axe longitudinal X-X. Une extrémité de fond 12 ferme cette partie 11 tandis que l'extrémité opposée s'épanouit pour se raccorder à une collerette 13. Un fourreau 2, ayant une forme de révolution avec un canal central 21, comprend une embase 22 logée dans la collerette de la coupelle de telle sorte qu'hormis l'embase 22, le fourreau 2 s'étend hors de la coupelle en direction opposée à la partie cylindrique 11 de celle-ci, et coaxialement. La collerette 13 est sertie autour de l'embase 22.

La partie tubulaire 11 de la coupelle est emplie d'une masse de matière qui est très dilatable et contractile en fonction des variations de température, notamment autour d'une température fonctionnelle, ici une masse de cire 3. L'embase 22 du fourreau comporte dans sa face qui est en vis-à-vis de cette masse de cire, un logement annulaire 23 dans lequel est ancrée la périphérie d'un diaphragme 4 en forme de disque et déformable élastiquement, obturant le canal central 21 du fourreau du côté de la coupelle 1. A l'intérieur du canal 21 du fourreau, est logé un piston 5 assujetti aux mouvements de la région centrale du diaphragme par l'intermédiaire d'un tampon 7 en élastomère déformable en contact contre la surface du diaphragme opposée à la cire et d'une rondelle 8 en polymère tel que du PTFE insérée entre le tampon et le piston et ajustée dans le canal 21 pour empêcher le fluage de l'élastomère du tampon autour du piston. L'extrémité du piston 5 opposée au diaphragme 4 est plus ou moins en saillie hors du fourreau en fonction du volume occupé par la cire, donc de la température de celle-ci.

La conception générale de ces éléments thermostatiques est bien adaptée à l'utilisation d'une cire dont le coefficient de dilatation est très important par rapport à celui des fluides communs (environ 10 à 20 fois supérieur) et ainsi susceptible de provoquer un mouvement très ample du piston. Malheureusement, ces cires ont une très faible conductibilité thermique (environ 1000 fois inférieure à celle du cuivre), et ainsi la température de la masse entière de la cire ne reflète qu'imparfaitement et avec un grand retard celle du fluide qui baigne la coupelle. Pour cette raison, la cire est généralement « chargée » d'une poudre en matière présentant une bonne conductibilité thermique, par exemple une poudre de cuivre de granulométrie appropriée. Par simplification, dans la suite, on désignera par « cire » aussi bien les matières chargées que les mélanges non chargés et les cires à composant unique. Cependant, tous ces artifices sont insuffisants pour obtenir un élément thermostatique à réponse rapide utilisable sans précaution particulière dans une installation sanitaire.

Pour remédier en particulier à cet inconvénient, on a proposé, notamment dans EP-A-0 153 555, de rapporter, à l'intérieur de la coupelle de l'élément thermostatique, un insert métallique en contact avec la face intérieure de la coupelle, comme représenté aux figures 1 et 2 sur laquelle cet insert est référencé 6. Cet insert présente, en coupe transversale comme à la figure 2, une section pleine en forme de croix dont les quatre branches s'étendent de la zone centrale de l'élément thermostatique jusqu'à la paroi tubulaire 11 de la coupelle 1. Suivant l'axe X-X, l'insert 6 s'étend sur presque toute la longueur de la coupelle 1, son extrémité opposée au piston 5 étant en contact avec la paroi de fond 12 de la coupelle. L'insert 6 divise ainsi l'essentiel du volume intérieur de la coupelle 1 en quatre cavités borgnes distinctes 14 réparties autour de l'axe X-X et débouchant toutes sur le diaphragme 4. La majeure partie de la cire 3 est stockée dans ces cavités, le reste de la cire étant axialement interposée entre le diaphragme et les débouchés des cavités. De la sorte, la chaleur des parois tubulaire 11 et de fond 12 de la coupelle 1 est transmise plus rapidement à l'insert métallique interne 6 qu'à la cire 3, cette dernière étant alors chauffée par l'insert en complément de son chauffage par les parois de la coupelle.

Le temps de réponse de cet élément thermostatique est ainsi nettement amélioré. En revanche, lors des phases de refroidissement de cet élément thermostatique, durant lesquelles la cire 3 se contracte, la cire peut avoir des difficultés à rentrer dans les cavités 14 de la coupelle 1 sous l'action du piston 5 en cours d'escamotage, en raison de la faible section transversale des débouchés de ces cavités, par lesquels la cire doit se retirer vers la paroi de fond 12 de la coupelle, en laissant une place suffisante pour l'escamotage du piston. Ces difficultés d'écoulement de la cire au niveau des débouchés des cavités 14 sont d'autant plus marqués lorsque ces cavités présentent une profondeur importante, comme c'est le cas pour une coupelle dite « longue », c'est-à-dire une coupelle du type des figures 1 et 2, dont la dimension axiale est sensiblement supérieure à son diamètre pour augmenter la surface d'échange thermique entre la cire et la face intérieure de la coupelle. En pratique, les causes potentielles de ces difficultés d'écoulement de la cire sont notamment liées :
- à un manque d'homogénéité de la cire 3, en particulier lorsque cette dernière est chargée d'une poudre conductrice de la chaleur, comme évoquée plus haut, puisque, après de multiples cycles de dilatation et de contraction de cette cire, la proportion de la poudre conductrice tend à augmenter dans certaines zones, ce qui a pour effet d'augmenter localement la viscosité de la cire chargée, et/ou
- à des différences de dimensions des sections transversales des différentes cavités 14, résultant de la conception de la coupelle 1 et/ou de l'insert métallique 6, et/ou résultant d'imprécisions d'assemblage de cet insert lors de la fabrication de l'élément thermostatique.

Quelle qu'en soit la cause, la difficulté d'écoulement de la cire 3 dans une des cavités 14 accentue l'hystérésis des comportements de l'élément thermostatique lors de son échauffement et de son refroidissement puisque le piston 5 est ralenti, voire bloqué lors de son escamotage pour une température de sollicitation de l'élément thermostatique supérieure à celle à laquelle le piston devrait en principe arrêter sa course d'escamotage, ce qui revient à décalibrer l'élément thermostatique.

Le but de la présente invention est de proposer un élément thermostatique à réponse rapide, qui soit plus fiable et dont les cycles de comportement soient plus stables dans le temps.

A cet effet, l'invention a pour objet un élément thermostatique, tel que défini à la revendication 1.

Avec l'élément thermostatique selon l'invention, la matière dilatable et contractile peut passer d'une des cavités délimitées à l'intérieur de la coupelle à une autre de ces cavités, via la ou les ouvertures de passage, dans la partie de la coupelle opposée au piston. Autrement dit, cette matière peut s'écouler d'une cavité à l'autre en au moins un autre endroit qu'au niveau de la zone de matière comprise entre l'extrémité escamotable du piston et le moyen de division de l'élément thermostatique. De la sorte, même si, au cours d'une phase de refroidissement de cet élément thermostatique, la matière dilatable et contractile a des difficultés à pénétrer, sous l'effet de la pression générée par la charge du piston en cours d'escamotage, dans l'une des cavités au niveau du débouché de cette cavité tourné vers le piston, cette cavité peut alors être remplie par de la matière dilatable et contractile provenant d'une ou de plusieurs des cavités adjacentes, en passant par les ouvertures de passage délimitées par le moyen de division. La différence des comportements de l'élément thermostatique lors de son échauffement et de son refroidissement est ainsi constante lors de ses cycles de fonctionnement, puisque les risques qu'une des cavités de stockage de la matière dilatable et contractile soit totalement isolée des autres cavités sont faibles, ce qui évite au piston, lors de son escamotage, d'être bloqué à une altitude supérieure à celle à laquelle il devrait en principe se stabiliser lors du refroidissement de l'élément thermostatique. Par rapport à l'élément thermostatique relevant des figures 1 et 2, la fiabilité et la pérennité de l'élément thermostatique selon l'invention sont significativement améliorées.

D'autres caractéristiques de cet élément thermostatique, prises isolément ou selon toutes les combinaisons techniquement possibles, sont énoncées aux revendications dépendantes 2 à 12.

L'invention a également pour objet une cartouche thermostatique, ainsi qu'un robinet thermostatique, munis d'un élément thermostatique tel que défini ci-dessus.

L'invention sera mieux comprise à la lecture de la description qui va suivre, donnée uniquement à titre d'exemple et faite en se référant aux dessins, sur lesquels :
- la figure 1 est une coupe longitudinale d'un élément thermostatique connu qui a été décrit plus haut ;
- la figure 2 est une coupe transversale de l'élément de la figure 1 selon le plan II-II de cette figure, le plan I-I indiqué à la figure 2 correspondant au plan de coupe de la figure 1 ;
- la figure 3 est une vue analogue à la figure 1, d'un premier mode de réalisation d'un élément thermostatique selon l'invention ;
- la figure 4 est une coupe transversale de l'élément thermostatique de la figure 3 selon le plan IV-IV de cette figure, le plan III-III indiqué à la figure 4 correspondant au plan de coupe de la figure 3 ;
- la figure 5 est une coupe longitudinale de l'élément de la figure 3, selon le plan V-V de la figure 4 ;
- la figure 6 est un éclaté en perspective d'un organe interne à l'élément de la figure 3 ;
- la figure 7 est une vue en perspective de l'organe de la figure 6, représenté à l'état assemblé ;
- la figure 8 est une vue analogue à la figure 3, illustrant un état de fonctionnement de l'élément ;
- les figures 9 à 11 sont des vues analogues aux figures 3 à 5, d'un second mode de réalisation d'un élément thermostatique selon l'invention, les plans indiqués IX-IX et XI-XI à la figure 10 correspondant respectivement au plan de coupe des figures 9 et 11 tandis que le plan X-X à la figure 9 correspond au plan de coupe de la figure 10 ;
- la figure 12 est une vue en perspective d'un organe interne à l'élément de la figure 9, cet organe ayant une fonction analogue à celle de l'organe représenté à la figure 7 ; et
- les figures 13 et 14 sont des vues respectivement analogues aux figures 10 et 12, illustrant une variante du second mode de réalisation selon l'invention.

L'élément thermostatique connu des figures 1 et 2 ayant été décrit plus haut, il ne sera pas détaillé ici de nouveau. Par commodité, les organes des éléments thermostatiques selon l'invention qui correspondent à des organes de l'élément connu portent les mêmes repères numériques.

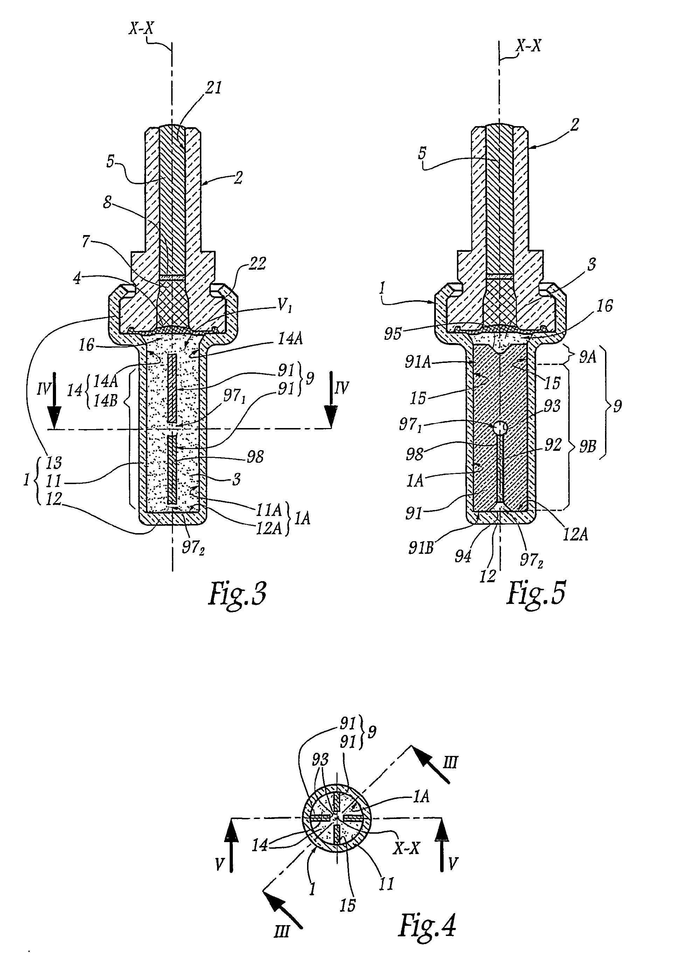

Comme l'élément thermostatique connu, les différents éléments thermostatiques représentés aux figures 3 à 5, 8 à 11 et 13 sont destinés à équiper une cartouche de robinet ou un robinet thermostatique et comportent :
- une coupelle métallique 1 s'étendant le long d'un axe central X-X, ayant une paroi courante tubulaire 11 emplie d'une masse de matière essentiellement dilatable et rétractile 3, telle que de la cire, et munie, à une extrémité, d'une paroi transversale de fond 12 fermée tandis que l'extrémité opposée s'épanouit pour se raccorder à une collerette 13,
- un fourreau 2 ayant une forme de révolution avec un canal central 21 et une embase 22 logée dans la collerette de la coupelle, la collerette 13 étant sertie autour de l'embase 22, et la coupelle et le fourreau s'étendant coaxialement suivant l'axe X-X dans des directions opposées,
- un diaphragme 4 élastiquement déformable et un piston 5 assujetti au mouvement de la région centrale de ce diaphragme par l'intermédiaire d'un tampon 7, avec interposition d'une rondelle 8, ces composants n'étant pas ici détaillés de nouveau puisqu'ils ont été présentés précédemment en regard des figures 1 et 2, et
- un insert métallique 9 détaillé ci-dessous.

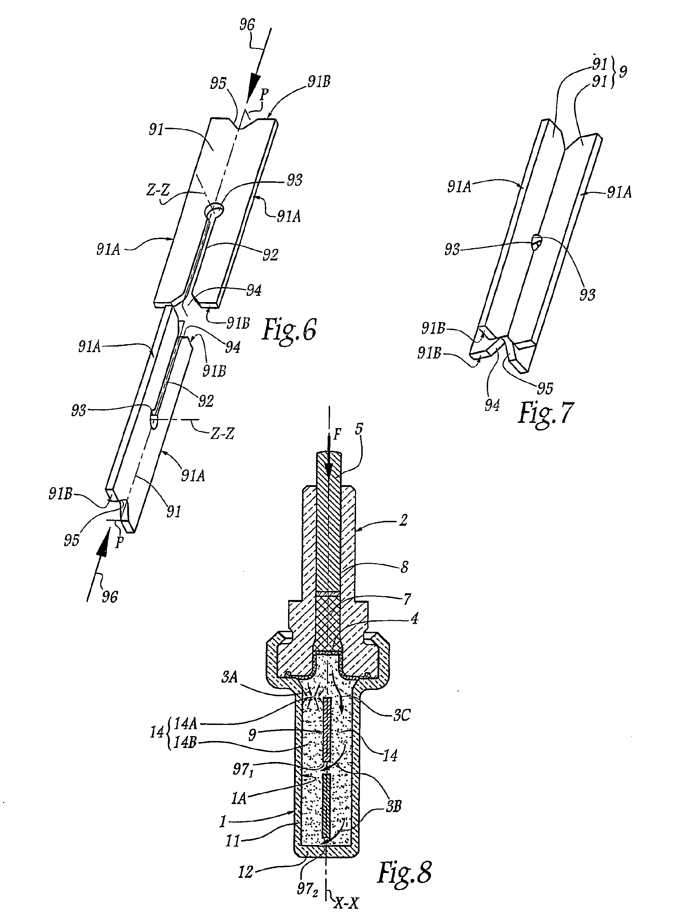

En s'intéressant maintenant aux différences par rapport à l'élément des figures 1 et 2, et en considérant plus en détail le mode de réalisation des figures 3 à 8, l'insert 9 est constitué de deux plaquettes métalliques planes 91 identiques l'une à l'autre. Comme représenté plus en détail aux figures 6 et 7, chaque plaquette 91 a une forme globalement parallélépipédique de faible épaisseur et présentant un plan de symétrie P s'étendant suivant le plan à la fois médian à la plaquette et parallèle aux côtés latéraux 91A de la plaquette, étant convenu que les côtés latéraux sont les côtés opposés les plus longs de la plaquette vue de face, tandis que les deux autres côtés opposés 91B sont désignés par la suite comme étant les côtés frontaux de la plaquette.

Chaque plaquette 91 présente une longueur légèrement inférieure à celle de la partie tubulaire 11 de la coupelle 1, tandis que sa largeur, c'est-à-dire la dimension séparant les deux côtés latéraux 91A, est sensiblement égale au diamètre intérieur de cette partie tubulaire.

Chaque plaquette 91 est munie d'une fente longitudinale traversante 92 qui s'étend suivant le plan de symétrie P, depuis un des côtés frontaux 91B jusqu'à mi-longueur de la plaquette 91. De part et d'autre du plan P, les bords de la fente 92 sont écartés d'une distance sensiblement égale à l'épaisseur de la plaquette 91.

Au niveau de son extrémité longitudinale située à la mi-longueur de la plaquette 91, la fente 92 débouche dans un trou traversant 93 central à la plaquette. Ce trou est de forme globalement cylindrique à base circulaire et d'axe noté Z-Z. A son extrémité opposée, la fente 92 débouche sur le chant du côté frontal 91B en formant une échancrure évasée 94 sensiblement symétrique par rapport au plan P et convergente vers la partie courante de la fente.

Au niveau de son côté frontal 91B opposé à celui muni de l'échancrure 94, chaque plaquette 91 présente une autre échancrure frontale 95 sensiblement symétrique à l'échancrure 94 par rapport à un plan à la fois perpendiculaire au plan P et contenant l'axe Z-Z.

Chaque plaquette est fabriquée de manière économique, notamment par découpe d'une tôle métallique de faible épaisseur.

Les deux plaquettes 91 sont adaptées pour être assemblées l'une à l'autre pour former l'insert 9, en positionnant la moitié non fendue de chaque plaquette dans la fente 92 de l'autre plaquette. Dans la configuration assemblée des plaquettes 91, représentée à la figure 7, les deux plaquettes s'étendent de façon sensiblement perpendiculaire l'une à l'autre, en formant, en coupe transversale comme à la figure 4, un motif en croix à quatre branches orthogonales les unes aux autres. Les trous 93 ménagés à l'extrémité fermée des fentes des deux plaquettes sont alors en communication l'un avec l'autre, leur axe respectifs Z-Z s'étendant perpendiculairement l'un à l'autre. En raison du dimensionnement de ces trous, chacun des quatre quadrants du motif en croix formé par les plaquettes 91 est en libre communication avec les trois autres quadrants.

L'assemblage des deux plaquettes 91 l'une à l'autre est réalisé en positionnant d'abord les deux plaquettes comme à la figure 6, c'est-à-dire avec leur plan respectifs P sensiblement perpendiculaires l'un à l'autre et leur côté frontal 91B muni de l'échancrure 94 en regard l'un de l'autre. Puis, en rapprochant les deux plaquettes 91 l'une par rapport à l'autre suivant une direction parallèle à leur direction longitudinale, comme indiqué par les flèches 96 à la figure 6, les fentes 92 des deux plaquettes pénètrent l'une dans l'autre, la forme évasée des échancrures 94 guidant le positionnement relatif des deux plaquettes lors de l'amorçage de la mise en prise des plaquettes l'une avec l'autre. Ce mouvement de rapprochement relatif est poursuivi jusqu'à ce que les axes respectifs Z-Z des trous 93 se coupent l'un l'autre, de manière perpendiculaire. L'échancrure frontale 94 ménagée à l'extrémité ouverte de la fente 92 de chacune des plaquettes est alors située au même niveau que l'échancrure 95 de l'autre plaquette, les chants d'extrémité des côtés frontaux correspondants 91B de chaque plaquette étant alors en affleurement l'un avec l'autre. De manière analogue à la zone de croisement des trous 93, chaque zone frontale de croisement des échancrures 94 et 95 met en libre communication les quatre quadrants du motif en croix formé par les plaquettes 91.

Dans sa configuration assemblée de la figure 7, l'insert 9, constitué des deux plaquettes 91, est prévu pour être assemblé à la coupelle 1 des figures 3 à 5, en étant introduit dans le volume intérieur V₁ de la coupelle de sorte que sa direction longitudinale s'étende parallèlement à l'axe X-X de la coupelle 1, puis en étant soudé à la face intérieure 1A de cette coupelle. Plus précisément, l'insert 9 est rapporté à l'intérieur de la coupelle 1 de sorte que les parties non fendues 98 des plaquettes, positionnées respectivement entre les bords de la fente 92 de l'autre plaquette s'étendent dans le prolongement l'une de l'autre, de façon sensiblement alignée avec l'axe X-X de la coupelle 1. Par commodité, la suite de la description sera orientée de façon que les termes « supérieur » et « haut » désignent une direction dirigée vers la partie haute des figures 3, 5 et 8, tandis que les termes « inférieur » et « bas » correspondent à une direction opposée, l'axe X-X s'étendant ainsi suivant une direction sensiblement verticale sur les figures précitées. De la sorte, l'insert 9 est rapporté à l'intérieur de la coupelle 1 suivant un mouvement vertical, orienté du haut vers le bas.

L'assemblage de l'insert 9 dans la coupelle 1 conduit à ce que:
- les deux côtés frontaux 91B inférieurs des plaques 91 sont en contact avec la face supérieure 12A de la paroi de fond 12 de la coupelle, et
- les quatre côtés latéraux 91A des plaquettes 91 sont en contact avec la face intérieure 11A de la partie tubulaire 11 de la coupelle.

De la sorte, les plaquettes 91 sont en contact avec la face intérieure 1A de la coupelle 1 au niveau de quatre zones distinctes référencées 15 à la figure 4. Comme la longueur de l'insert 9 est légèrement inférieure à celle de la partie tubulaire 11 de la coupelle 1, la partie d'extrémité frontale supérieure 9A de l'insert 9, constituée des deux côtés frontaux 91B supérieurs des plaquettes 91, est axialement distante du diaphragme 4, en délimitant une zone volumique 16 de la partie haute du volume intérieur V₁ de la coupelle, axialement située à peu près au niveau de la base inférieure de la collerette 13.

La cire 3 contenue dans la coupelle 1 est ainsi stockée dans, d'une part, la zone volumique 16 et, d'autre part, quatre cavités longitudinales 14 délimitées par l'insert 9 et la coupelle 1, au niveau des quatre quadrants du motif en croix formé par les plaquettes 91 de cet insert. Plus précisément, l'insert 9 divise la partie basse du volume intérieur V₁ de la coupelle 1 en ces quatre cavités 14 réparties uniformément autour de l'axe X-X et présentant, en coupe transversale comme à la figure 4, un profil en portion de cercle d'angle au sommet valant 90° environ. Chaque cavité 14 s'étend en longueur sur sensiblement toute la longueur de la partie tubulaire 11 de la coupelle 1, en étant fermée à son extrémité inférieure par la paroi de fond 12 tandis qu'elle débouche, à son extrémité supérieure, dans la zone volumique 16. Les débouchés 14A des cavités sont ainsi délimités par la partie d'extrémité frontale supérieure 9A de l'insert, le reste de l'insert, situé au-dessous de ces débouchés, étant noté 9B sur les figures.

Avantageusement, plus de 80%, voire 90%, de la cire 3 est ainsi stocké dans les quatre cavités 14.

L'insert métallique 9 est relié de façon fixe à la face intérieure 1A de la coupelle 1, en étant soudé à cette face le long des zones de contact 15. De la sorte, la partie basse 9B de l'insert isole les parties basses 14B des cavités 14 les unes des autres, excepté au niveau de deux ouvertures 97₁ et 97₂, délimitées respectivement par exclusivement les plaquettes 91, dans la zone de croisement de leur trou 93, et par conjointement les plaquettes 91, au niveau de la zone de croisement de leur échancrure inférieure 94 et 95, et la face supérieure 12A de la paroi de fond 12 de la coupelle 1. Ainsi, en dehors de la zone volumique supérieure 16, les cavités 14 sont en libre communication fluidique les unes avec les autres via ces ouvertures 97₁ et 97₂, par lesquelles la cire 3 peut passer librement.

En fonctionnement, lorsque l'élément thermostatique des figures 3 à 5 passe d'un premier état dit « froid », dans lequel sa cire 3 présente une température homogène égale à la température d'un milieu extérieur, tel que de l'eau mélangée en sortie d'une cartouche de robinet mitigeur, à un état échauffé résultant d'une augmentation soudaine de la température de ce milieu extérieur, un flux thermique se produit du milieu extérieur vers la coupelle 1, puis de la coupelle 1 vers la cire thermodilatable 3, jusqu'à ce que, au bout d'une certaine durée, l'élément thermostatique, en particulier sa cire 3, atteigne une température homogène égale à la nouvelle température échauffée du milieu extérieur. Plus précisément, la chaleur circule très rapidement dans tout le métal de la coupelle 1, notamment jusqu'à sa paroi intérieure 1A délimitant en partie les cavités internes 14, ainsi que dans tout le métal de l'insert 9, les soudures de cet insert à la face intérieure 1A de la coupelle constituant des continuités thermiques entre la coupelle 1 et l'insert 9. Cet insert joue ainsi le rôle d'un radiateur de conduction de la chaleur entre la coupelle et la cire contenue dans les cavités 14.

La température de la cire 3 ayant augmentée, la cire se dilate et, comme l'ensemble coupelle 1/fourreau 2 n'est pas déformable, la cire 3 déforme, en se dilatant, le diaphragme 4, qui, à son tour, déforme le tampon 7, ce dernier translatant la rondelle 8 et le piston 5 dans le canal 21 du fourreau. Ainsi, une augmentation de la température du milieu extérieur entraîne la translation du piston 5 hors du fourreau 2, suivant la direction X-X, au bout d'une durée donnée, appelée en pratique « temps de réponse ». Ce temps de réponse est d'autant plus court que le flux thermique vers la cire 3 est important, d'où l'intérêt de la forme en croix à branches orthogonales les unes aux autres du radiateur interne 9 et de la division qui en résulte du volume intérieur V₁ de la coupelle en les quatre cavités 14. En effet, ce flux thermique augmente avec la valeur de la surface de contact entre la cire 3 et le métal échauffé de la coupelle 1 et du radiateur 9, tandis qu'il diminue avec la distance maximale, en coupe transversale, entre toute particule de la cire et ces parois métalliques.

En outre, l'obtention du radiateur 9 par les plaquettes fendues 91 assemblées l'une à l'autre permet de disposer de parois métalliques de délimitation des cavités 14 particulièrement peu épaisses, ce qui optimise le temps de réponse de l'élément thermostatique, puisque, en raison de sa faible masse, le radiateur 9 ne nécessite qu'une petite quantité d'énergie et donc de temps pour être échauffé.

Le fonctionnement décrit ci-dessus est réversible lorsque la température du milieu extérieur diminue. Dans ce cas, l'élément thermostatique se contracte en passant d'une température dans laquelle la cire 3 est dilatée dans un état visqueux, voir liquide, comme représenté à la figure 8, à une température plus basse pour laquelle la cire 3 est contractée dans un état plus visqueux, voire solide, comme aux figures 3 à 5. La majeure partie de la masse de cire 3 située dans la zone 16, c'est-à-dire située entre le diaphragme 4 et le radiateur 9, pénètre alors dans les cavités 14 sous l'action de la force de pression F générée par la charge du piston 5 repoussé en pratique par des moyens de rappel non représentés, extérieurs à l'élément thermostatique. La force de pression F est transmise à la cire 3 par l'intermédiaire du tampon 7 et du diaphragme 4 lors de l'escamotage du piston 5 dans le fourreau 2.

Cependant, dans certains cas, notamment après de multiples cycles de fonctionnement chauffage/refroidissement, la cire 3 a souvent des difficultés, au cours de la phase de refroidissement de l'élément thermostatique, à pénétrer dans les cavités 14 au niveau de leur débouché 14A. Comme expliqué en détail dans la partie introductive du présent document, le débouché 14A d'une des cavités 14 peut se trouver en effet obturé, comme indiqué par les flèches 3A pour la cavité représentée dans la partie gauche de la figure 8. Dans ce cas, de la cire 3 provenant des trois autres cavités 14 passe alors par les ouvertures 97₁ et 97₂, comme indiqué par les flèches 3B, pour remplir la cavité dont le débouché est obturé. La cire qui passe par ces ouvertures est déplacée sous l'effet de la force de pression F du piston 5, transmise par la cire contenue dans la zone volumique 16, qui se retire ainsi dans les trois cavités 14 non obturées, dont la cavité représentée dans la partie droite de la figure 8, comme indiqué par la flèche 3C.

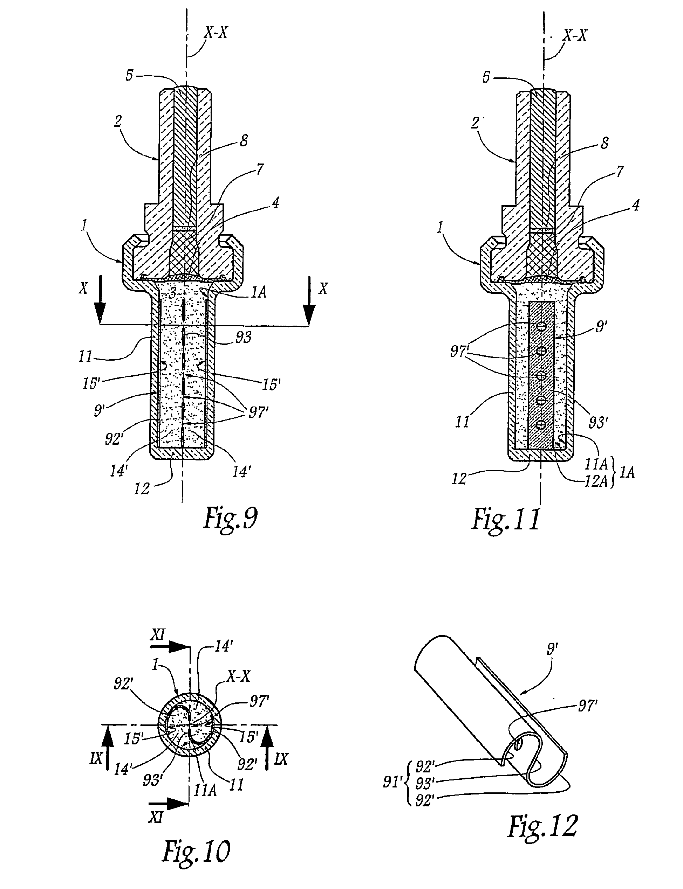

La forme de réalisation des figures 9 à 12 se distingue essentiellement de celle des figures 3 à 8 par son radiateur métallique 9' qui, bien que de fonction analogue au radiateur 9 du mode de réalisation des figures 3 à 8, présente une structure différente. Contrairement à l'insert 9 constitué des deux plaquettes 91 assemblées l'une à l'autre, le radiateur 9' est constitué d'une seule pièce, à savoir une plaque métallique ondulée 91' représentée seule à la figure 12. Cette plaque présente un axe longitudinal de symétrie, confondu avec l'axe X-X sur les figures 9 à 11. En coupe transversale comme à la figure 10, la plaque 91' présente une section en forme globale de S. Lorsque le radiateur 9' est assemblé à la coupelle 1 de l'élément thermostatique, les deux parties extrêmes incurvées symétriques 92' de la plaque 91 sont en contact avec la face intérieure 1A de cette coupelle, au niveau de deux zones de contact 15' diamétralement opposées, portées par la face intérieure 11A de la partie tubulaire 11 de la coupelle. L'insert 9' est soudé à la coupelle 1 au niveau de ces zones de contact 15'.

La partie intermédiaire 93' de la plaque 91, depuis laquelle s'étendent latéralement les parties extrêmes incurvées 92', est sensiblement plane, en s'étendant dans un plan diamétral de la coupelle 1 correspondant sensiblement au plan de coupe de la figure 11. Cette partie intermédiaire 93' délimite, à elle seule, cinq trous traversant 97' répartis uniformément suivant la direction longitudinale de la partie 93' et constituant des ouvertures de passage de la cire 3 de part et d'autre de la plaque 91, fonctionnellement analogues aux ouvertures 97₁ et 97₂ décrites précédemment. Les deux cavités 14' délimitées de part et d'autre de la plaque 91' sont ainsi en libre communication fluidique dans leur partie basse, c'est-à-dire opposée au piston 5, via ces ouvertures 97'.

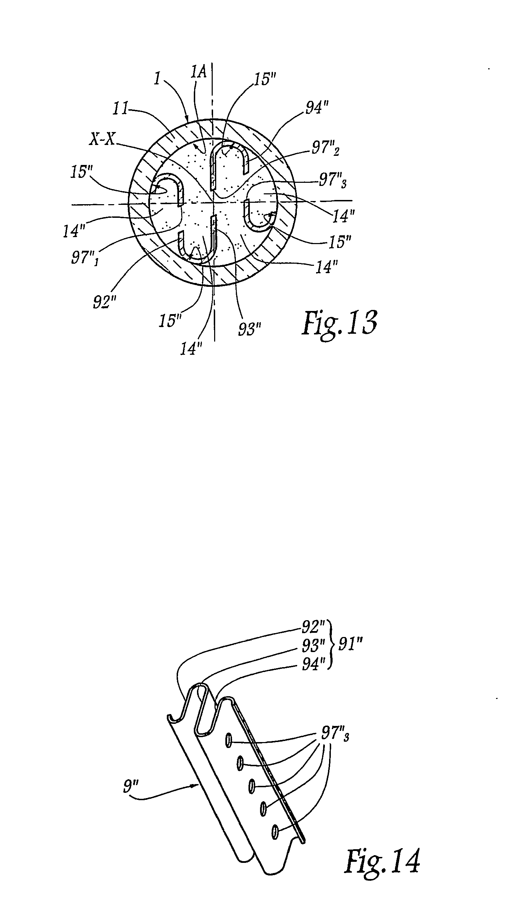

Le mode de réalisation des figures 13 et 14 est une variante de celui des figures 9 à 12 et ne se distingue de ce dernier que par la géométrie de son radiateur interne 9". En coupe transversale, comme représenté à la figure 13, cet insert 9" présente une forme globale de N. Plus précisément, la plaque ondulée métallique 91" constituant le radiateur 9" comporte successivement :
- une première paroi 92" présentant une section transversale en forme globale de S, dont une première partie d'extrémité latérale est soudée à la face intérieure 1A de la coupelle 1 au niveau d'une zone de contact 15", tandis que la partie d'extrémité opposée est soudée à cette face 1A au niveau d'une autre zone de contact 15", la partie intermédiaire de la paroi 92" délimitant des ouvertures 97"₁ qui traversent de part en part cette paroi ;
- une seconde paroi 93" présentant une section transversale en forme globale de S, dont une première partie d'extrémité latérale est constituée par la seconde partie d'extrémité précitée de la paroi 92", tandis que la partie d'extrémité opposée est soudée à la paroi intérieur 1A de la coupelle 1 au niveau d'une troisième zone de contact 15", la partie intermédiaire de cette paroi 93" délimitant des ouvertures 97"₂ qui traversent de part en part la paroi ; et
- une troisième paroi 94", également de section transversale en forme globale de S, dont une partie d'extrémité latérale est constituée par la seconde partie d'extrémité précitée de la paroi 93", tandis que la partie d'extrémité opposée est soudée à la face intérieure 1A de la coupelle 1 au niveau d'une quatrième zone de contact 15", la partie intermédiaire de cette paroi 94" étant également ajourée par des ouvertures traversantes 97"₃.

La géométrie de l'insert 9" permet de délimiter, avec la face intérieure 1A de la coupelle 1, quatre cavités 14" de stockage de la cire 3, fonctionnellement analogues aux cavités précitées 14 et 14'. Dans leur partie opposée au piston 5, chaque cavité 14" est en libre communication fluidique avec au moins une autre des cavités 14", via les ouvertures 97"₁, 97"₂ et 97"₃.

Divers aménagements et variantes aux éléments thermostatiques décrits ci-dessus sont bien entendu envisageables :
- on peut prévoir notamment des formes de réalisation présentant des dimensions différentes, appropriées à l'application spécifique de l'élément thermostatique ;
- de même, des formes de cavité de stockage de la cire très diverses sont possibles, résultant des diverses géométries envisageables du radiateur interne, dont des plaquettes fendues positionnées l'une dans l'autre peuvent être par exemple galbées, et/ou résultant de diverses géométries de la coupelle, dont la face extérieure latérale peut présenter des plats, des dépressions et/ou des bombements ou bien dont la longueur peut être plus faible que le diamètre ;
- plutôt que de prévoir la soudure du radiateur dans la coupelle de l'élément termostatique, ce radiateur peut être venu de matière avec la face intérieure de la coupelle ; et/ou
- bien que les exemples envisagés ci-dessus incluent plusieurs ouvertures de passage de la cire 3 entre les cavités délimitées dans la coupelle 1, une seule ouverture de ce type peut être suffisante pour éviter les risques de blocage de la cire 3 au niveau du débouché de ces cavités, cette unique ouverture pouvant tout aussi bien être située dans la partie courante du radiateur, comme les ouvertures 97₁, 97' ou 97"₁, 97"₂ et 97"₃, qu'au niveau de son extrémité opposée au piston 5, c'est-à-dire à proximité de la paroi de fond 12 de la coupelle, comme l'ouverture 97₂.

## Revendications

1. Elément thermostatique, comportant, d'une part, une coupelle métallique externe (1) dont le volume intérieur (V₁) contient une matière (3) dilatable et contractile en fonction du sens de variation de sa température et qui est intérieurement pourvue d'un moyen (9 ; 9'; 9") de division de son volume intérieur, reliant au moins deux zones distinctes (15 ; 15' ; 15") de la face intérieure (1A) de la coupelle (1) en délimitant plusieurs cavités (14 ; 14' ; 14") de stockage d'au moins une partie de la matière (3), et, d'autre part, un piston (5) mobile par rapport à la coupelle suivant une direction axiale (X-X) de celle-ci et couplé à la matière dilatable et contractile (3) pour se déplacer en sens opposés selon que la matière se dilate ou se contracte, **caractérisé en ce que** le moyen de division (9 ; 9' ; 9") comporte, dans sa partie (9B) opposée au piston (5), au moins une ouverture (97₁, 97₂ ; 97' ; 97"₁, 97"₂, 97"₃) de passage de la matière dilatable et contractile (3) entre au moins deux des cavités de stockage de cette matière (14 ; 14' ; 14").

2. Elément thermostatique suivant la revendication 1, **caractérisé en ce que** la ou au moins l'une des ouvertures de passage (97₁ ; 97' ; 97"₁ ; 97"₂, 97"₃) est délimitée exclusivement par le moyen de division (9 ; 9' ; 9").

3. Elément thermostatique suivant l'une des revendications 1 ou 2, **caractérisé en ce que** la ou au moins une (97₂) des ouvertures de passage est délimitée conjointement par le moyen de division (9) et la face intérieure (1A) de la coupelle (1).

4. Elément thermostatique suivant l'une quelconque des revendications précédentes, **caractérisé en ce que** le moyen de division (9 ; 9' ; 9") s'étend en longueur suivant une direction sensiblement parallèle à la direction axiale (X-X) de la coupelle (1), et **en ce que** les orifices de passage (97₁, 97₂ ; 97'; 97"₁, 97"₂, 97"₃) sont répartis suivant la longueur du moyen de division.

5. Elément thermostatique suivant l'une quelconque des revendications précédentes, **caractérisé en ce que** la ou au moins une (97₂) des ouvertures de passage est prévue à l'extrémité du moyen de division (9) opposée au piston (5).

6. Elément thermostatique suivant l'une quelconque des revendications précédentes, **caractérisé en ce que** le moyen de division (9; 9' ; 9") forme un radiateur métallique de conduction de la chaleur entre la coupelle (1) et la matière dilatable et contractile (3) stockée dans les cavités (14; 14' ; 14").

7. Elément thermostatique suivant la revendication 6, **caractérisé en ce que** le radiateur (9 ; 9' ; 9") comporte au moins une paroi métallique (91 ; 91' ; 92", 93", 94") de délimitation des cavités (14 ; 14' ; 14") de stockage de la matière dilatable et contractile (3), en contact avec la face intérieure (1A) de la coupelle (1) au niveau de deux zones distinctes (15 ; 15' ; 15"), le ou les orifices de passage (97₁, 97₂ ; 97' ; 97"₁, 97"₂, 97"₃) traversant de part en part ladite paroi.

8. Elément thermostatique suivant l'une des revendications 6 ou 7, **caractérisé en ce que** le radiateur (9) est constitué de plusieurs pièces (91) assemblées les unes aux autres.

9. Elément thermostatique suivant l'une des revendications 6 ou 7, **caractérisé en ce que** le radiateur (9' ; 9") est constitué d'une seule pièce (91'; 91"), présentant de préférence, en coupe transversale par rapport à la direction axiale (X-X) de la coupelle (1), une section globalement en forme de S ou de N.

10. Elément thermostatique suivant l'une quelconque des revendications 6 à 9, **caractérisé en ce que** le radiateur (9 ; 9' ; 9") est soudé à la face intérieure (1A) de la coupelle (1).

11. Elément thermostatique suivant l'une quelconque des revendications 6 à 10, **caractérisé en ce que** le radiateur (9) comporte au moins deux plaquettes métalliques partiellement fendues (91) de délimitation des cavités (14) de stockage de la matière dilatable et contractile (3), chacune en contact avec la face intérieure (1A) de la coupelle (1), au niveau de deux zones distinctes (15), et assemblées l'une à l'autre en positionnant une partie non fendue (98) de chaque plaquette dans la fente (92) de l'autre plaquette, et **en ce que** la ou au moins une des ouvertures de passage (97₁, 97₂) est délimitée par une partie (93, 94) d'au moins une des fentes (92) de ces plaquettes (91).

12. Elément thermostatique suivant l'une quelconque des revendications précédentes, **caractérisé en ce que** la coupelle (1) inclut, suivant sa direction axiale (X-X), une paroi courante tubulaire (11) le long de la face intérieure (11A) de laquelle s'étendent les zones distinctes (15 ; 15' ; 15") reliées par le moyen de division (9 ; 9', 9") de sorte que la partie (9B) de ce moyen opposée au piston (5) isole les unes des autres les parties (14B) des cavités (14 ; 14' ; 14") opposées au piston, excepté au niveau de la ou des ouvertures (97₁, 97₂ ; 97' ; 97"₁, 97"₂, 97"₃) de passage de la matière dilatable (3).

13. Cartouche thermostatique ou robinet thermostatique équipé d'un élément thermostatique conforme à l'une quelconque des revendications précédentes.

## Claims

1. A thermostatic element comprising, on the one hand, an outer metal cup (1) whose internal volume (V₁) contains a material (3) that can expand and contract according to the direction of variation of its temperature and that is internally provided with a means (9; 9'; 9") for dividing its internal volume, linking at least two distinct zones (15; 15'; 15") of the inner face (1A) of the cup (1) while delimiting several cavities (14; 14'; 14") for storing at least a portion of the material (3), and, on the other hand, a piston (5) that can move relative to the cup in an axial direction (X-X) of the latter and is coupled to the expandable and contractile material (3) in order to move in the opposite direction depending on whether the material expands or contracts, **characterized in that** the dividing means (9; 9'; 9") comprises, in its portion (9B) opposite to the piston (5), at least one through-opening (97₁, 97₂; 97'; 97"₁, 97"₂, 97"₃) for the expandable and contractile material (3) to pass between at least two of the cavities (14; 14'; 14") for storing this material.

2. The thermostatic element as claimed in claim 1, **characterized in that** the or at least one of the through-openings (97₁; 97'; 97"₁, 97"₂, 97"₃) is delimited exclusively by the dividing means (9; 9'; 9").

3. The thermostatic element as claimed in one of claims 1 or 2, **characterized in that** the or at least one (97₂) of the through-openings is jointly delimited by the dividing means (9) and the inner face (1A) of the cup (1).

4. The thermostatic element as claimed in any one of the preceding claims, **characterized in that** the dividing means (9; 9'; 9") extends lengthwise in a direction substantially parallel to the axial direction (X-X) of the cup (1), and **in that** the through-openings (97₁, 97₂; 97'; 97"₁, 97"₂, 97"₃) are distributed along the length of the dividing means.

5. The thermostatic element as claimed in any one of the preceding claims, **characterized in that** the or at least one (97₂) of the through-openings is provided at the end of the dividing means (9) opposite to the piston (5).

6. The thermostatic element as claimed in any one of the preceding claims, **characterized in that** the dividing means (9; 9'; 9") forms a metal radiator for conducting heat between the cup (1) and the expandable and contractile material (3) stored in the cavities (14; 14'; 14").

7. The thermostatic element as claimed in claim 6, **characterized in that** the radiator (9; 9'; 9") comprises at least one metal wall (91; 91'; 92", 93", 94") for delimiting the cavities (14; 14'; 14") for storing the expandable and contractile material (3), in contact with the inner face (1A) of the cup (1) at two distinct zones (15; 15'; 15"), the through-opening(s) (97₁, 97₂; 97'; 97"₁, 97"₂, 97"₃) passing right through said wall.

8. The thermostatic element as claimed in one of claims 6 or 7, **characterized in that** the radiator (9) consists of several parts (91) assembled together.

9. The thermostatic element as claimed in one of claims 6 or 7, **characterized in that** the radiator (9'; 9") consists of a single part (91'; 91") preferably having, in cross section relative to the axial direction (X-X) of the cup (1), a generally S-shaped or N-shaped section.

10. The thermostatic element as claimed in any one of claims 6 to 9, **characterized in that** the radiator (9; 9'; 9") is welded to the inner face (1A) of the cup (1).

11. The thermostatic element as claimed in any one of claims 6 to 10, **characterized in that** the radiator (9) comprises at least two partially slotted metal plates (91) delimiting the cavities (14) for storing the expandable and contractile material (3), each in contact with the inner face (1A) of the cup (1), at two distinct zones (15), and assembled together by placing an unslotted portion (98) of each plate in the slot (92) of the other plate, and **in that** the or at least one of the through-openings (97₁, 97₂) is delimited by a portion (93, 94) of at least one of the slots (92) of these plates (91).

12. The thermostatic element as claimed in any one of the preceding claims, **characterized in that** the cup (1) includes, in its axial direction (X-X), a tubular unsupported wall (11) along the inner face (11A) of which the distinct zones (15; 15'; 15") extend connected by the dividing means (9; 9'; 9") so that the portion (9B) of this means opposite to the piston (5) isolates from one another the portions (14B) of the cavities (14; 14'; 14") opposite to the piston, except at the through-opening or openings (97₁, 97₂; 97'; 97"₁, 97"₂, 97"₃) of the expandable material (3).

13. Thermostatic cartridge or thermostatic faucet fitted with a thermostatic element according to any one of the preceding claims.

## Patentansprüche

1. Thermostatisches Element, umfassend einerseits eine externe metallische Kapsel (1), deren Innenvolumen (V₁) eine Substanz (3) enthält, die je nach Richtung ihrer Temperaturänderung dehnbar und zusammenziehbar ist, und die im Innern mit einem Mittel (9; 9'; 9") zum Unterteilen ihres Innenvolumens versehen ist, das mindestens zwei verschiedene Bereiche (15; 15'; 15") der Innenseite (1A) der Kapsel (1) verbindet, indem es mehrere Hohlräume (14; 14'; 14") zum Aufbewahren mindestens eines Teils der Substanz (3) begrenzt, und andererseits einen Kolben (5), der im Verhältnis zu der Kapsel in ihrer Axialrichtung (X-X) bewegbar ist und mit der dehnbaren und zusammenziehbaren Substanz (3) gekoppelt ist, um sich in der entgegengesetzten Richtung zu bewegen, je nachdem ob sich die Substanz dehnt oder zusammenzieht, **dadurch gekennzeichnet, dass** das Unterteilungsmittel (9; 9'; 9") in seinem Teil (9B) gegenüber der dem Kolben (5) mindestens eine Öffnung (97₁, 97₂; 97'; 97"₁, 97"₂, 97"₃) zum Durchgang der dehnbaren oder zusammenziehbaren Substanz (3) zwischen mindestens zwei Hohlräumen zum Aufbewahren dieser Substanz (14; 14'; 14") umfasst.

2. Thermostatisches Element nach Anspruch 1, **dadurch gekennzeichnet, dass** die Durchgangsöffnung oder mindestens eine der Durchgangsöffnungen (97₁; 97'; 97"₁; 97"₂, 97"₃) ausschließlich durch das Unterteilungsmittel (9; 9'; 9") begrenzt wird.

3. Thermostatisches Element nach einem der Ansprüche 1 oder 2, **dadurch gekennzeichnet, dass** die Durchgangsöffnung oder mindestens eine (97₂) der Durchgangsöffnungen gemeinsam durch das Unterteilungsmittel (9) und die Innenseite (1A) der Kapsel (1) begrenzt ist.

4. Thermostatisches Element nach einem der vorhergehenden Ansprüche, **dadurch gekennzeichnet, dass** das Unterteilungsmittel (9; 9'; 9") sich der Länge nach in einer Richtung erstreckt, die zu der Axialrichtung (X-X) der Kapsel (1) im Wesentlichen parallel ist, und dass die Durchgangsöffnungen (97₁, 97₂; 97'; 97"₁, 97"₂, 97"₃) der Länge des Unterteilungsmittels nach verteilt sind.

5. Thermostatisches Element nach einem der vorhergehenden Ansprüche, **dadurch gekennzeichnet, dass** die Durchgangsöffnung oder mindestens eine (97₂) der Durchgangsöffnungen an dem Ende des Unterteilungsmittels (9) bereitgestellt wird, das dem Kolben (5) gegenüberliegt.

6. Thermostatisches Element nach einem der vorhergehenden Ansprüche, **dadurch gekennzeichnet, dass** das Unterteilungsmittel (9; 9'; 9") einen metallischen Strahler zur Wärmeleitung zwischen der Kapsel (1) und der dehnbaren und zusammenziehbaren Substanz (3), die in den Hohlräumen (14; 14'; 14") aufbewahrt wird, bildet.

7. Thermostatisches Element nach Anspruch 6, **dadurch gekennzeichnet, dass** der Strahler (9; 9'; 9") mindestens eine metallische Wand (91; 91'; 92", 93", 94") zur Abgrenzung der Hohlräume (14; 14'; 14") zur Aufbewahrung der dehnbaren und zusammenziehbaren Substanz (3) in Kontakt mit der Innenseite (1A) der Kapsel (1) an zwei unterschiedlichen Bereichen (15; 15'; 15") umfasst, wobei die Durchgangsöffnung(en) (97₁, 97₂; 97'; 97"₁, 97"₂, 97"₃) die Wand durchgehend durchqueren.

8. Thermostatisches Element nach einem der Ansprüche 6 oder 7, **dadurch gekennzeichnet, dass** der Strahler (9) aus mehreren Teilen (91) besteht, die zusammengefügt sind.

9. Thermostatisches Element nach einem der Ansprüche 6 oder 7, **dadurch gekennzeichnet, dass** der Strahler (9'; 9") aus einem einzigen Teil (91'; 91 ") besteht, das bevorzugt im Querschnitt im Verhältnis zur Axialrichtung (X-X) der Kapsel (1) ein insgesamt S- oder N-förmiges Querprofil aufweist.

10. Thermostatisches Element nach einem der Ansprüche 6 bis 9, **dadurch gekennzeichnet, dass** der Strahler (9; 9'; 9") mit der Innenseite (1A) der Kapsel (1) verschweißt ist.

11. Thermostatisches Element nach einem der Ansprüche 6 bis 10, **dadurch gekennzeichnet, dass** der Strahler (9) mindestens zwei teilweise geschlitzte Metallplättchen (91) zur Abgrenzung der Hohlräume (14) zum Aufbewahren der dehnbaren und zusammenziehbaren Substanz (3), jeweils in Kontakt mit der Innenseite (1A) der Kapsel (1) an zwei unterschiedlichen Bereichen (15), und die zusammengefügt sind, indem ein nicht geschlitzter Teil (98) jedes Plättchens in den Schlitz (92) des anderen Plättchens gesetzt wird, umfasst, und dass die Durchgangsöffnung oder mindestens eine der Durchgangsöffnungen (91₁, 97₂) durch einen Teil (93, 94) mindestens eines der Schlitze (92) dieser Plättchen (91) begrenzt wird.

12. Thermostatisches Element nach einem der vorhergehenden Ansprüche, **dadurch gekennzeichnet, dass** die Kapsel (1) in ihrer Axialrichtung (X-X) eine röhrenförmige Ablaufwand (11) umfasst, an deren Innenseite (11A) entlang sich die unterschiedlichen Bereiche (15; 15'; 15") erstrecken, die durch das Unterteilungsmittel (9; 9', 9") verbunden werden, so dass der Teil (9B) dieses Mittels, der dem Kolben (5) gegenüberliegt, die Teile (14B) der Hohlräume (14; 14'; 14"), die dem Kolben gegenüberliegen, voneinander trennt, außer an der oder den Durchgangsöffnung(en) (97₁, 97₂; 97'; 97"₁, 97"₂, 97"₃) der dehnbaren Substanz (3).

13. Thermostatische Kartusche oder thermostatischer Hahn, ausgestattet mit einem thermostatischen Element nach einem der vorhergehenden Ansprüche.
